# EUROPEAN PATENT APPLICATION

(11) **EP 4 435 146 A2**
(43) Date of publication of application: **25.09.2024**
(21) Application number: 24152545.0
(22) Date of filing: 18.01.2024
(51) Int. Cl.: C25B 1/04, C25B 9/77, C25B 11/031, C25B 11/054, C25B 11/081, C25B 15/08

(54) **ELECTRODE STRUCTURE AND WATER ELECTROLYZER**

(30) Priority: 22.03.2023 JP 2023045864
(71) Applicant: SCREEN Holdings Co., Ltd., Kyoto-shi, Kyoto 602-8585 (JP)
(72) Inventor: KAWAKAMI, Takuto, Kyoto, 602-8585 (JP); MORI, Takayuki, Kyoto, 602-8585 (JP)
(74) Representative: Goddar, Heinz J.

(57) **Abstract**

An electrode structure includes an electrolyte membrane, a catalyst layer (61), a porous layer (62), and an ionomer layer (63). The catalyst layer (61) is formed on a surface of the electrolyte membrane. The porous layer (62) is stacked on an external side of the catalyst layer (61). The ionomer layer (63) is interposed between the catalyst layer (61) and the porous layer (62). Thus, it is possible to reduce electrical contact resistance between the catalyst layer (61) and the porous layer (62).

## Description

### BACKGROUND OF THE INVENTION

### Field of the Invention

The present invention relates to an electrode structure and a water electrolyzer.

### Description of the Background Art

In a solid polymer water electrolyzer conventionally known, hydrogen (H₂) is produced by electrolysis of water (H₂O). The solid polymer water electrolyzer has a cell stack with cells and separators stacked alternately. Each of the cells includes an electrolyte membrane, a catalyst layer formed on each of both sides of the electrolyte membrane, and a porous layer further stacked on an external side of the catalyst layer.

During use of the solid polymer water electrolyzer, a voltage is applied between an anode-side catalyst layer and a cathode-side catalyst layer and water is supplied to the anode-side catalyst layer. This causes electrochemical reactions as follows in the anode-side catalyst layer and the cathode-side catalyst layer. As a result, hydrogen is output from the cathode-side catalyst layer.

(anode side) 2H₂O → 4H⁺ + O₂ + 4e⁻

(cathode side) 2H⁺ + 2e⁻ → H₂

The conventional solid polymer water electrolyzer is described in Japanese Patent Application Laid-Open No. 2022-023996, for example.

In the cell of the water electrolyzer, the electrons (e⁻) explained above are required to flow between the catalyst layer and the porous layer. Meanwhile, the catalyst layer and the porous layer are made of different types of materials having different electron conductivities. Hence, electrical contact resistance is caused at a boundary between the catalyst layer and the porous layer. This presents difficulty in causing electrons to flow efficiently between the catalyst layer and the porous layer.

### SUMMARY OF THE INVENTION

The present invention is intended to provide an electrode structure and a water electrolyzer that achieve reduction in electrical contact resistance between a catalyst layer and a porous layer.

The present invention is intended for an electrode structure comprising: an electrolyte membrane; a catalyst layer formed on a surface of the electrolyte membrane; a porous layer stacked on an external side of the catalyst layer; and an ionomer layer interposed between the catalyst layer and the porous layer.

According to the present invention, interposing the ionomer layer between the catalyst layer and the porous layer achieves reduction in electrical contact resistance between the catalyst layer and the porous layer.

Preferably, the catalyst layer contains: a plurality of catalyst particles; and an ionomer covering the plurality of catalyst particles.

Preferably, a catalyst particle is supported in the porous layer.

Supporting the catalyst particle in the porous layer achieves reduction in the thickness of the catalyst layer. Furthermore, the presence of the catalyst particles both in the catalyst layer and the porous layer achieves further reduction in electrical contact resistance between the catalyst layer and the porous layer.

Preferably, the catalyst layer contains a plurality of catalyst particles made of iridium oxide, platinum, an alloy of iridium and ruthenium, or an alloy of iridium and titanium dioxide, and the porous layer is a porous base material made of titanium metal or a titanium alloy.

Thus, it is possible to reduce electrical contact resistance between the catalyst layer and the porous layer on an anode side of the electrode structure.

Preferably, the catalyst layer contains a plurality of carbon particles on which platinum is supported, and the porous layer is a porous base material made of carbon.

Thus, it is possible to reduce electrical contact resistance between the catalyst layer and the porous layer on a cathode side of the electrode structure.

The present invention is further intended for a water electrolyzer comprising the electrode structure described above.

Thus, it is possible to reduce electrical contact resistance between the catalyst layer and the porous layer in the water electrolyzer.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic view of a water electrolyzer;
Fig. 2 is a schematic view showing one cell and separators in a pair arranged on both sides of the cell;
Fig. 3 is a schematic view conceptually showing a part of an anode catalyst layer; and
Fig. 4 schematically shows a structure in the vicinity of a boundary between an anode catalyst layer and an anode porous layer.

### DESCRIPTION OF THE PREFERRED EMBODIMENTS

A preferred embodiment of the present invention will be described below by referring to the drawings.

### <1. Water Electrolyzer According to Preferred Embodiment>

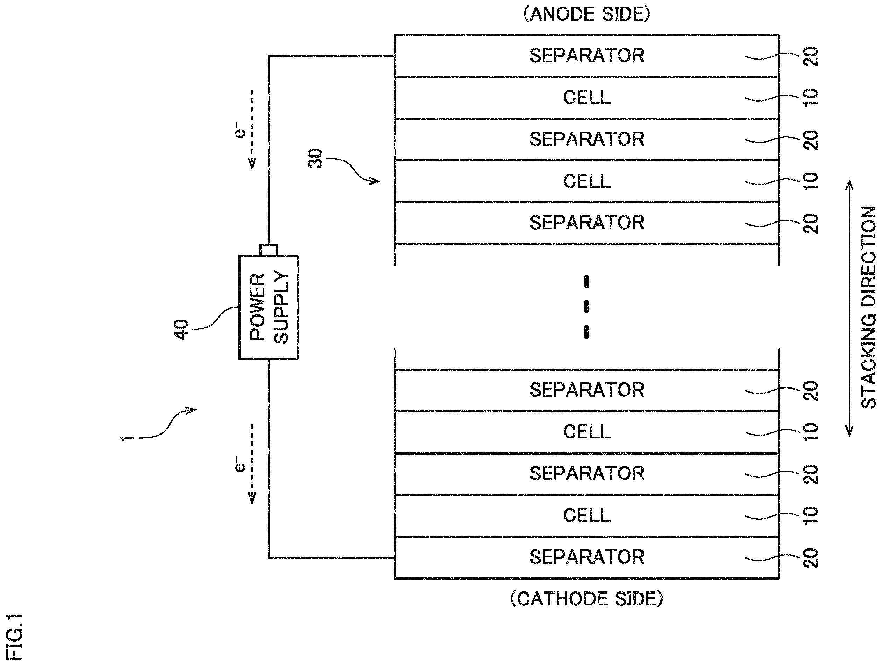

Fig. 1 is a schematic view of a water electrolyzer 1 according to a preferred embodiment of the present invention. The water electrolyzer 1 is to produce hydrogen by solid polymer water electrolysis. As shown in Fig. 1, the water electrolyzer 1 includes a cell stack 30 composed of a plurality of cells 10 and a plurality of separators 20, and a power supply 40 that applies a voltage to the cell stack 30. The cells 10 and the separators 20 are stacked alternately to form the cell stack 30. In the following, a direction in which the cells 10 and the separators 20 are stacked will be called a "stacking direction."

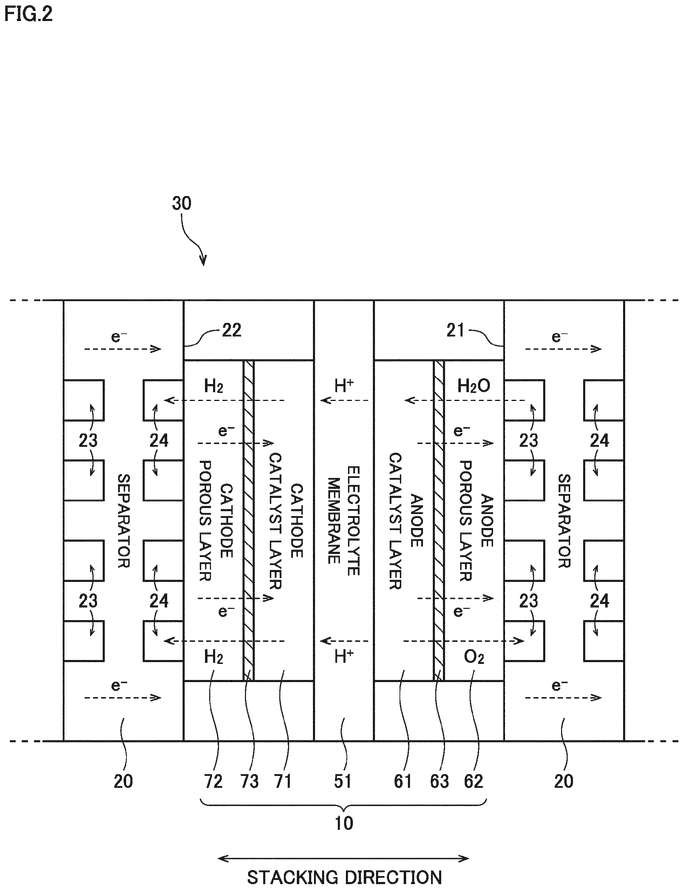

Fig. 2 shows only one cell 10 and separators 20 in a pair arranged on both sides of this cell 10 schematically that form the cell stack 30 of the water electrolyzer 1. As shown in Fig. 2, one cell 10 includes an electrolyte membrane 51, an anode catalyst layer 61, an anode porous layer 62, an anode ionomer layer 63, a cathode catalyst layer 71, a cathode porous layer 72, and a cathode ionomer layer 73.

A stacked body composed of the electrolyte membrane 51, the anode catalyst layer 61, and the cathode catalyst layer 71 is called a catalyst-coated membrane (CCM). A stacked body composed of the electrolyte membrane 51, the anode catalyst layer 61, the anode porous layer 62, the anode ionomer layer 63, the cathode catalyst layer 71, the cathode porous layer 72, and the cathode ionomer layer 73 is called a membrane-electrode-assembly (MEA). The membrane-electrode-assembly corresponds to an example of an "electrode structure" of the present invention.

The electrolyte membrane 51 is a membrane like a thin plate having ion conductivity (ion-exchange membrane). The electrolyte membrane 51 of the present preferred embodiment is a proton-exchange membrane that conducts hydrogen ions (H⁺). A fluorine-based or hydrocarbon-based polymer electrolyte membrane is used as the electrolyte membrane 51. More specifically, a polymer electrolyte membrane containing perfluorocarbon sulfonic acid is used as the electrolyte membrane 51, for example. The electrolyte membrane 51 has a thickness from 5 to 200 µm, for example.

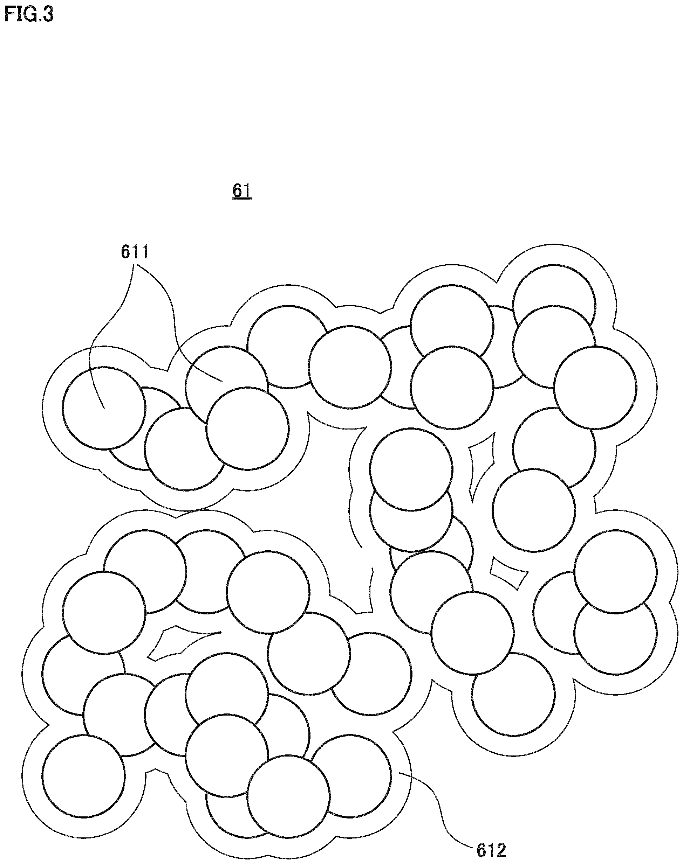

The anode catalyst layer 61 is a catalyst layer that causes electrochemical reaction on an anode side. The anode catalyst layer 61 is formed on an anode-side surface of the electrolyte membrane 51. Fig. 3 is a schematic view conceptually showing a part of the anode catalyst layer 61. As shown in Fig. 3, the anode catalyst layer 61 contains a plurality of catalyst particles 611 and an ionomer 612.

The catalyst particles 611 are particles for causing electrolysis of water. The catalyst particles 611 are made of iridium oxide (IrOx), platinum (Pt), an alloy of iridium (Ir) and ruthenium (Ru), or an alloy of iridium (Ir) and titanium dioxide (TiO₂), for example.

The ionomer 612 is an electrolyte polymer covering the catalyst particles 611. The ionomer 612 functions to transport hydrogen ions in the anode catalyst layer 61 generated by electrolysis of water. For example, nafion (perfluorocarbon sulfonic acid) is used as the ionomer 612. The ionomer 612 has a polymer chain with an ion-exchange group such as a sulfone group. The hydrogen ions are combined with water in the anode catalyst layer 61 to become oxionium ions (H₃O⁺). These oxionium ions propagate through the ion-exchange group of the ionomer 612.

During manufacture of the catalyst-coated membrane, the catalyst particles 611 and the ionomer 612 are first mixed with a solvent such as water or alcohol to prepare catalyst ink for anode. Then, the prepared catalyst ink is applied to the anode-side surface of the electrolyte membrane 51 and dried. As a result, the anode catalyst layer 61 is formed on the anode-side surface of the electrolyte membrane 51.

During use of the water electrolyzer 1, water (H₂O) is supplied to the anode catalyst layer 61. Then, the power supply 40 applies a voltage between the anode catalyst layer 61 and the cathode catalyst layer 71. By doing so, by the actions of the applied voltage and the catalyst particles 611, the water is electrolyzed into hydrogen ions (H⁺), oxygen (O₂), and electrons (e⁻) in the anode catalyst layer 61.

The anode porous layer 62 is a layer for supplying water uniformly from the separator 20 to the anode catalyst layer 61 and for transporting oxygen and electrons generated in the anode catalyst layer 61 to the separator 20. The anode porous layer 62 is also called a porous transport layer (PTL).

The anode porous layer 62 is stacked on an external side of the anode catalyst layer 61 (on the opposite side to the electrolyte membrane 51) across the anode ionomer layer 63 described later. The anode porous layer 62 has conductivity and is made of a porous material. The anode porous layer 62 is formed using a porous base material made of titanium metal or a titanium alloy, for example.

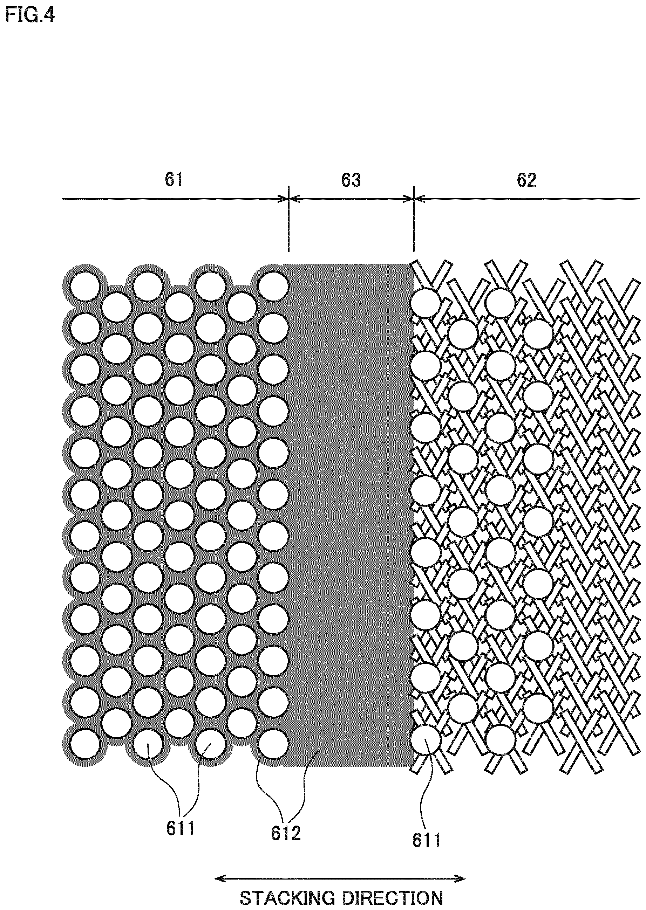

Fig. 4 schematically shows a structure in the vicinity of a boundary between the anode catalyst layer 61 and the anode porous layer 62. As shown in Fig. 4, catalyst particles 611 of the same type as those in the anode catalyst layer 61 are supported in the anode porous layer 62. Specifically, the catalyst particles 611 made of iridium oxide (IrOx), platinum (Pt), an alloy of iridium (Ir) and ruthenium (Ru), or an alloy of iridium (Ir) and titanium dioxide (TiO₂) are supported in the anode porous layer 62. The weight of the catalyst particles 611 supported in the anode porous layer 62 is smaller than that of the catalyst particles 611 forming the anode catalyst layer 61.

Desirably, the catalyst particles 611 are supported particularly in a part of the anode porous layer 62 including a surface closer to the anode catalyst layer 61. Supporting the catalyst particles 611 in the anode porous layer 62 achieves reduction in the thickness of the anode catalyst layer 61 in the stacking direction while maintaining the quantity of the catalyst particles 611 as a whole. This allows oxygen generated in the anode catalyst layer 61 to flow easily from the anode catalyst layer 61 into the anode porous layer 62. As a result, it becomes possible to diffuse the oxygen with improved performance.

The anode ionomer layer 63 is a layer of an ionomer 612 interposed between the anode catalyst layer 61 and the anode porous layer 62 in the stacking direction. For example, the ionomer 612 forming the anode ionomer layer 63 is configured using the same nafion (perfluorocarbon sulfonic acid) as that forming the ionomer 612 in the anode catalyst layer 61 described above. Meanwhile, the anode ionomer layer 63 is a layer composed only of the ionomer 612 formed separately from the ionomer 612 in the anode catalyst layer 61.

The anode ionomer layer 63 is formed by applying or spraying the ionomer 612 to an external surface of the anode catalyst layer 61 (a surface closer to the anode porous layer 62) or to an internal surface of the anode porous layer 62 (a surface closer to the anode catalyst layer 61). Interposing the anode ionomer layer 63 improves tight contact property between the anode catalyst layer 61 and the anode porous layer 62. As a result, electrical contact resistance is reduced between the anode catalyst layer 61 and the anode porous layer 62.

The cathode catalyst layer 71 is a catalyst layer that causes electrochemical reaction on a cathode side. The cathode catalyst layer 71 is formed on a cathode-side surface of the electrolyte membrane 51 (a surface on the opposite side to the surface where the anode catalyst layer 61 is formed). The cathode catalyst layer 71 contains a large number of carbon particles on which catalyst particles are supported. The catalyst particles are particles of platinum, for example. Alternatively, the catalyst particles may be prepared by mixing particles of a tiny amount of ruthenium or cobalt into particles of platinum.

During use of the water electrolyzer 1, hydrogen ions (H⁺) and electrons (e⁻) are supplied to the cathode catalyst layer 71. Then, a voltage is applied between the anode catalyst layer 61 and the cathode catalyst layer 71 by the power supply 40. By doing so, by the actions of the applied voltage and the catalyst particles, a reduction reaction is caused in the cathode catalyst layer 71 to generate hydrogen gas (H₂) from the hydrogen ions and the electrons.

During manufacture of the catalyst-coated membrane, the carbon particles on which the catalyst particles are supported described above are first mixed with a solvent such as water or alcohol to prepare catalyst ink for cathode. Then, the prepared catalyst ink is applied to the cathode-side surface of the electrolyte membrane 51 and dried. As a result, the cathode catalyst layer 71 is formed on the cathode-side surface of the electrolyte membrane 51.

The cathode porous layer 72 is a layer for transporting electrons from the separator 20 to the cathode catalyst layer 71 and for transporting hydrogen generated in the cathode catalyst layer 71 to the separator 20. The cathode porous layer 72 is also called a gas diffusion layer (GDL).

The cathode porous layer 72 is stacked on an external side of the cathode catalyst layer 71 (on the opposite side to the electrolyte membrane 51) across the cathode ionomer layer 73 described later. The cathode porous layer 72 has conductivity and is made of a porous material. The cathode porous layer 72 is formed using a porous base material (carbon paper) made of carbon, for example.

Catalyst particles of the same type as those in the cathode catalyst layer 71 are supported in the cathode porous layer 72. Specifically, the cathode porous layer 72 supports carbon particles on which catalyst particles are supported. The catalyst particles are particles of platinum, for example. The weight of the catalyst particles supported in the cathode porous layer 72 is smaller than that of the catalyst particles in the cathode catalyst layer 71.

Desirably, the catalyst particles are supported particularly in a part of the cathode porous layer 72 including a surface closer to the cathode catalyst layer 71. Supporting the catalyst particles in the cathode porous layer 72 achieves reduction in the thickness of the cathode catalyst layer 71 in the stacking direction while maintaining the quantity of the catalyst particles as a whole. This allows hydrogen generated in the cathode catalyst layer 71 to flow easily from the cathode catalyst layer 71 into the cathode porous layer 72. As a result, it becomes possible to diffuse the hydrogen with improved performance.

The cathode ionomer layer 73 is a layer of an ionomer 612 interposed between the cathode catalyst layer 71 and the cathode porous layer 72 in the stacking direction. For example, the ionomer 612 forming the cathode ionomer layer 73 is configured using nafion (perfluorocarbon sulfonic acid).

The cathode ionomer layer 73 is formed by applying or spraying the ionomer 612 to an external surface of the cathode catalyst layer 71 (a surface closer to the cathode porous layer 72) or to an internal surface of the cathode porous layer 72 (a surface closer to the cathode catalyst layer 71). Interposing the cathode ionomer layer 73 improves tight contact property between the cathode catalyst layer 71 and the cathode porous layer 72. This reduces electrical contact resistance between the cathode catalyst layer 71 and the cathode porous layer 72.

The separator 20 is a layer for moving electrons between the cells 10 next to each other and for forming a passage for water, oxygen, and hydrogen. The separator 20 is interposed between the anode porous layer 62 of the cell 10 and the cathode porous layer 72 of the cell 10 next to the former cell 10. The separator 20 has conductivity and is made of a material impermeable to gas and liquid. For example. a metal plate is used as the separator 20.

The separator 20 has an anode surface 21 contacting the anode porous layer 62, and a cathode surface 22 contacting the cathode porous layer 72. The anode surface 21 is provided with a plurality of anode grooves 23. Water is supplied from the outside of the cell stack 30 to the anode porous layer 62 through the anode grooves 23 of the separator 20. Oxygen generated in the anode catalyst layer 61 passes through the anode ionomer layer 63 and the anode porous layer 62 and is then output to the outside of the cell stack 30 through the anode grooves 23 of the separator 20.

The cathode surface 22 of the separator 20 is provided with a plurality of cathode grooves 24. Hydrogen generated in the cathode catalyst layer 71 passes through the cathode ionomer layer 73 and the cathode porous layer 72 and is then output to the outside of the cell stack 30 through the cathode grooves 24 of the separator 20.

The power supply 40 is a device that applies a voltage to the cell stack 30. As shown in Fig. 1, the power supply 40 has a positive terminal electrically connected to the separator 20 at an end portion of the cell stack 30 farthest to the anode side. The power supply 40 has a negative terminal electrically connected to the separator 20 at an end portion of the cell stack 30 farthest to the cathode side. The power supply 40 applies a voltage to the cell stack 30 necessary for electrolysis of water.

During use of the water electrolyzer 1, water is supplied from the anode grooves 23 of the separator 20 to the anode catalyst layer 61 through the anode porous layer 62 and the anode ionomer layer 63. Then, by the actions of a voltage applied from the power supply 40 and the catalyst particles 611 in the anode catalyst layer 61, the water is decomposed into hydrogen ions, oxygen, and electrons. The hydrogen ions propagate through the electrolyte membrane 51 into the cathode catalyst layer 71. The oxygen passes through the anode ionomer layer 63, the anode porous layer 62, and the anode grooves 23 and is then output to the outside of the cell stack 30. The electrons pass through the anode ionomer layer 63, the anode porous layer 62, and the separator 20 and then flow into the adjoining cell 10.

In the adjoining cell 10, these electrons pass through the cathode porous layer 72 and the cathode ionomer layer 73 to reach the cathode catalyst layer 71. Then, the hydrogen ions and the electrons are combined with each other to generate hydrogen in the cathode catalyst layer 71. The generated hydrogen passes through the cathode ionomer layer 73, the cathode porous layer 72, and the cathode grooves 24 and is then output to the outside of the cell stack 30. In this way, hydrogen is produced.

As described above, the anode ionomer layer 63 is interposed between the anode catalyst layer 61 and the anode porous layer 62 in the water electrolyzer 1. Thus, tight contact property is improved between the anode catalyst layer 61 and the anode porous layer 62. This reduces electrical contact resistance between the anode catalyst layer 61 and the anode porous layer 62. As a result, it becomes possible for electrons generated by electrolysis in the anode catalyst layer 61 to flow efficiently from the anode catalyst layer 61 into the anode porous layer 62 during use of the water electrolyzer 1.

In particular, in the present preferred embodiment, the catalyst particles 611 are present both in the anode catalyst layer 61 and the anode porous layer 62. This achieves further reduction in electrical contact resistance between the anode catalyst layer 61 and the anode porous layer 62. As a result, it becomes possible for electrons to flow from the anode catalyst layer 61 into the anode porous layer 62 more efficiently.

In the water electrolyzer 1, the cathode ionomer layer 73 is interposed between the cathode catalyst layer 71 and the cathode porous layer 72. Thus, tight contact property is improved between the cathode catalyst layer 71 and the cathode porous layer 72. This reduces electrical contact resistance between the cathode catalyst layer 71 and the cathode porous layer 72. As a result, it becomes possible for electrons to flow efficiently from the cathode porous layer 72 into the cathode catalyst layer 71 during use of the water electrolyzer 1.

In particular, in the present preferred embodiment, the catalyst particles are present both in the cathode catalyst layer 71 and the cathode porous layer 72. This achieves further reduction in electrical contact resistance between the cathode catalyst layer 71 and the cathode porous layer 72. As a result, it becomes possible for electrons to flow from the cathode porous layer 72 into the cathode catalyst layer 71 more efficiently.

### <2. Modifications>

While the preferred embodiment of the present invention has been described above, the present invention is not limited to the above-described embodiment.

In the above-described preferred embodiment, the anode ionomer layer 63 is interposed between the anode catalyst layer 61 and the anode porous layer 62 and the cathode ionomer layer 73 is interposed between the cathode catalyst layer 71 and the cathode porous layer 72. However, it is not essential that an ionomer layer be provided on each of an anode side and a cathode side. The ionomer layer only has to be provided between a catalyst layer and a porous layer on at least one of an anode side and a cathode side of an electrode structure.

In the above-described preferred embodiment, the catalyst particles 611 are supported in the anode porous layer 62. However, it is not essential that the catalyst particles 611 be supported in the anode porous layer 62. Furthermore, in the above-described preferred embodiment, the catalyst particles are supported in the cathode porous layer 72. However, it is not essential that the catalyst particles be supported in the cathode porous layer 72. For this reason, an ionomer layer may be provided between a catalyst layer and a porous layer where catalyst particles are not supported.

The description of the preferred embodiment given above is intended for the electrode structure used in the water electrolyzer 1. However, a structure comparable to that of the above-described preferred embodiment may be applied as an electrode structure used in a fuel cell. Furthermore, a structure comparable to that of the above-described preferred embodiment may also be applied as an electrode structure used in a liquid organic hydrogen carrier (LOHC) process by which an aromatic compound such as toluene is hydrogenated to produce an organic hydride (toluene-methylcyclohexane, for example).

All the elements shown in the above-described preferred embodiment or modifications may be combined or some of these elements may be deleted, as appropriate, within a range not causing inconsistency.

While the invention has been shown and described in detail, the foregoing description is in all aspects illustrative and not restrictive. It is therefore understood that numerous modifications and variations can be devised without departing from the scope of the invention.

## Claims

1. An electrode structure comprising:
an electrolyte membrane (51);
a catalyst layer (61, 71) formed on a surface of said electrolyte membrane (51);
a porous layer (62, 72) stacked on an external side of said catalyst layer (61, 71); and
an ionomer layer (63, 73) interposed between said catalyst layer (61, 71) and said porous layer (62, 72).

2. The electrode structure according to claim 1, wherein
said catalyst layer (61) contains:
a plurality of catalyst particles (611); and
an ionomer (612) covering said plurality of catalyst particles.

3. The electrode structure according to claim 1 or 2, wherein
a catalyst particle is supported in said porous layer (62, 72).

4. The electrode structure according to any one of claims 1 to 3, wherein
said catalyst layer (61) contains a plurality of catalyst particles made of iridium oxide, platinum, an alloy of iridium and ruthenium, or an alloy of iridium and titanium dioxide, and
said porous layer (62) is a porous base material made of titanium metal or a titanium alloy.

5. The electrode structure according to any one of claims 1 to 3, wherein
said catalyst layer (71) contains a plurality of carbon particles on which platinum is supported, and
said porous layer (72) is a porous base material made of carbon.

6. A water electrolyzer (1) comprising the electrode structure according to any one of claims 1 to 5.
